# EUROPEAN PATENT SPECIFICATION

(11) **EP 3 229 309 B1**
(45) Date of publication and mention of the grant of the patent: **06.11.2019**
(21) Application number: 17164845.4
(22) Date of filing: 04.04.2017
(51) Int. Cl.: H01M 12/08, H01M 4/46, H01M 4/90

(54) **RECHARGEABLE ALUMINUM-AIR ELECTROCHEMICAL CELL**
WIEDERAUFLADBARE ELEKTROCHEMISCHE ALUMINIUM-LUFT-ZELLE
CELLULE ÉLECTROCHIMIQUE ALUMINIUM-AIR RECHARGEABLE

(30) Priority: 05.04.2016 ES 201630411
(43) Date of publication of application: 11.10.2017
(73) Proprietor: Albufera Energy Storage, S.L., 28049 Madrid (ES)
(72) Inventor: PINO MARTÍNEZ, Mikel, 28049 Madrid (ES); RODRÍGUEZ SOLER, Paloma, 28049 Madrid (ES); CHACÓN GUADALIX, Joaquín José, 28049 Madrid (ES)
(74) Representative: Serrano Irurzun, Javier

(56) References cited:
- WO-A1-2015/151099
- US-A1- 2009 053 594
- US-A1- 2011 059 355
- YANG YU ET AL: "Mechanisms of capacity degradation in reduced graphene oxide/[alpha]-MnO 2 nanorod composite cathodes of Li-air batteries", JOURNAL OF MATERIALS CHEMISTRY A: MATERIALS FOR ENERGY AND SUSTAINABILITY, vol. 1, no. 4, 29 March 2013 (2013-03-29), pages 1163-1170, XP55371537, GB ISSN: 2050-7488, DOI: 10.1039/C2TA00426G
- MOKHTAR MARLIYANA ET AL: "Recent developments in materials for aluminum-air batteries: A review", JOURNAL OF INDUSTRIAL AND ENGINEERING CHEMISTRY, THE KOREAN SOCIETY OF INDUSTRIAL AND ENGINEERING CHEMISTRY, KOREA, vol. 32, 17 August 2015 (2015-08-17), pages 1-20, XP029309964, ISSN: 1226-086X, DOI: 10.1016/J.JIEC.2015.08.004
- HUN-GI JUNG ET AL: "Ruthenium-Based Electrocatalysts Supported on Reduced Graphene Oxide for Lithium-Air Batteries", ACS NANO, vol. 7, no. 4, 23 April 2013 (2013-04-23), pages 3532-3539, XP55371647, US ISSN: 1936-0851, DOI: 10.1021/nn400477d

## Description

The present invention relates to a secondary aluminum-air electrochemical cell. Therefore, the invention may be framed within the energy storage sector and, in particular, the sector of technologies and industries that require energy accumulators.

### PRIOR ART

The present invention is based on the phenomenon discovered in the early 19th century by Georges Leclanché, who used carbon as the active material for the cathode of the Leclanché battery. He observed that the oxygen adsorbed onto the carbon was reduced thanks to the catalytic action of manganese oxide. This discovery led to research on the use of oxygen as a free, inexhaustible reagent. Thereafter, fuel batteries started to be developed thanks to William R. Grove and his publication "On the Gas Voltaic Battery", and to various scientists who conducted research on metal-air batteries.

Batteries and metal-air batteries were already then described as the batteries of the future, because it was no longer necessary to store the cathodic reagents, and the only limitation of the battery was the metal used at the anode. Since then, a large number of scientific publications and patents related to metal-air batteries have been presented and registered. Metals such as zinc [M. Xu, D.G. Ivey, Z. Xie, W. Qu, Journal of Power Sources 283 (2015) 358-371], the classic anode in a large number of primary batteries, magnesium [Y. Gofer, O. Chusid, D. Aurbach, Encyclopedia of Electrochemical Power Sources (2009) 285-301], aluminum [M. Mokhtar, M.Z.M. Talib, E.H. Majlan, S.M. Tasirin, W.M.F.W. Ramli, W.R.W. Daud, J. Sahari, Journal of Industrial and Engineering Chemistry 32 (2015) 1-20; D.R. Egan, C. Ponce de Leon, R.J.J. Wood, R.L. Jones, K.R. Stokes, F.F. Walsh, J. Power Sources 236 (2013) 293-310] and lithium [H. Cheng, K. Scott, Rechargeable Lithium Batteries (2015) 41-71], in recent years, have been widely studied. Much of this research focuses on primary, or non-electrically rechargeable, batteries, and developments such as the zinc-air battery or the magnesium-silver nitrate battery have become commercialised and established in the market for specific applications.

WO2015151099 A1 and US2011059355 A1 are relating to metal-air batteries.

In regards to the rechargeability of these electrochemical pairs, a large number of patents have been filed related to zinc or lithium, but currently none of these developments have been commercialised, or are expected to be industrially produced.

Aluminum and air have widely studied by various research groups worldwide and a number of companies, such as Alupower or Alcan, have filed a large number of patents for the optimal compositions of aluminum alloys as anodes or additives for the electrolyte. All these patents were based on the aluminum-air battery with an aqueous electrolyte.

An aluminum-air battery, or Al-air battery, comprises an aluminum anode that reacts with the oxygen in the air and a cathode that is immersed in an aqueous electrolyte. Said battery produces electricity (1.5 V when the electrolyte is alkaline) from the following half-reactions [M. Pino, J. Chacón, E. Fatas, P. Ocón, Journal of Power Sources 299 (2015) 195-201]:
- oxidation half-reaction at the anode is

   Al + 30H- → Al(OH)₃ + 3e- [-2.31 V]
- reduction half-reaction at the cathode is

   O₂ + 2H₂O + 4e- → 40H- [+0.40 V]

   the overall reaction being

   4Al + 3O₂ + 6H₂O → 4Al(OH)₃ [+2.71 V]

   Aluminum-air batteries are primary cells, i.e. non-rechargeable. Once the aluminum anode is consumed, the battery ceases to produce electricity. Rechargeability in aqueous media becomes very complicated, because the aluminum reduction potential is higher than the water decomposition potential (±1.2 V). For this reason, when a current is applied to reduce the aluminum ions present in the aqueous electrolyte after the battery has been discharged, the water decomposes into O₂ and H₂, without achieving the reduction of the Al³⁺ ion to the metallic state.

The rechargeability of aluminum cells has been widely studied and there are two pathways that have provided the most satisfactory results: the first is the use of organic solvents with precursor salts for aluminum deposition, such as aluminum chloride or aluminum fluoride [S. Licht, R. Tel-Vered, G. Levitin, C. Yarnitzky, Journal of The Electrochemical Society 147 (2000) 496-501]. The main problem with these solvents is their high volatility, as well as the high corrosion index that they cause on carbonaceous materials, for which reason the air cathode does not seem to operate correctly. The second pathway, which is even more recent, is the use of ionic liquids for aluminum electrodeposition [O.B. Babushkina, E. Lomako, J. Wehr, O. Rohr, Molten Salts Chemistry and Technology (2014) 339-349] and has offered very promising results. The disadvantage of these ionic liquids is their high viscosity at room temperature and the influence of the working temperature on the yield.

Therefore, it is necessary to develop aluminum-air electrochemical cells that may satisfactorily respond to charge and discharge cycles.

### DESCRIPTION OF THE INVENTION

The present invention relates to a secondary aluminum-air electrochemical cell, i.e. the present invention relates to a rechargeable or reversible electrochemical cell or battery. The cell comprises aluminum as the negative electrode, which faces two positive electrodes that form the cathode. The anode and the cathode are electrically connected by a non-aqueous electrolyte composed of an ionic liquid and an organic solvent. In order to prevent short circuits due to contact between the electrodes, polymer separation membranes are used with a pore size that allows for mobility of the Al⁺³ ions towards the cathode.

The set of elements is wrapped with a micro-perforated housing in order to allow for the entry of oxygen during discharge of the battery and for the exit of oxygen during charge, according to the reactions:
- cathode half-reaction during discharge or oxygen reduction reaction:

   O₂ + 2e⁻ → 2O^{*-}
- cathode half-reaction during charge or formation of oxygen (known as oxygen evolution reaction):

   2O^{*-} → O₂ + 2e⁻

These micro-perforations are about 1 to 10, preferably between 1 and 5 µm, in order to prevent the exit of the electrolyte or the entry of moisture, whilst allowing for the entry and the exit of oxygen to and from the electrodes. These perforations are sufficiently small such that, thanks to the surface tension of water, the latter is not able to enter. Moreover, since it is composed of large-sized molecules, the electrolyte cannot physically escape from the housing.

In the electrochemical cell of the present invention, the following half-reaction is produced during discharge:
- at the anode: the aluminum oxidation half-reaction, to produce aluminum ions

   (Al⁺³) Al + 3e⁻ → Al³⁺
- at the cathode: the oxygen reduction half-reaction, to produce superoxides according to the reaction:

   O₂ + 2e^{- →} 2O^{*-}

The overall reaction being:

Al + O₂ → AlO₂^{*-}

During recharge, the opposite process takes place, such that the original species are regenerated, and the aluminum superoxide breaks down, to cause the reduction of metallic aluminum (Al⁰) at the anode and the formation of oxygen at the cathodes.

The Al-air battery of the present invention has a cyclability greater than 200 cycles, maintaining a coulombic efficiency of 75%, with an initial cell potential higher than 2 volts during the first charge and discharge cycles, due to the formation of a solid electrolyte interphase at the positive electrode, which consists of a solid interphase of electrolytes absorbed by the gas diffusion layer. Subsequently, the cell potential becomes stabilised at about 1.5 V.

Therefore, a first aspect of the present invention relates to a secondary aluminum-air electrochemical cell characterised in that it comprises:
- a first positive electrode and a second positive electrode electrically connected to one another to form the cathode;
- a negative electrode that forms the anode, placed between the first positive electrode and the second positive electrode;
- a first separation membrane placed between the first positive electrode and the negative electrode;
- a second separation membrane placed between the second positive electrode and the negative electrode;
- a non-aqueous electrolyte that covers the first positive electrode, the second positive electrode, the negative electrode, the first separation membrane and the second separation membrane;
- a housing that comprises the first positive electrode, the second positive electrode, the negative electrode, the first separation membrane, the second separation membrane and the electrolyte;
where each positive electrode comprises:
- a metal mesh that confers stability upon the positive electrode, which is responsible for collecting the electrons originating from the anode during discharge and responsible for directing the electrons towards the anode during charge;
- a gas diffusion layer, pressed into the metal mesh, which is selected from a pyrolytic graphite sheet or a non-woven carbon fabric;
- and a catalytic ink dispersed on the gas diffusion layer, wherein the catalytic ink comprises:
   ∘ a catalyst that comprises at least one metal oxide selected from ruthenium oxide RuO₂, manganese oxide MnO₂, iridium oxide IrO₂, nickel oxide Ni₂O₃ and lanthanum oxide La₂O₃;
   ∘ a support for the reduced graphene oxide catalyst;
   ∘ and an alcoholic solution;
where each separation membrane has a pore size ranging between 60 and 90 pm, which allows for passage of the Al⁺³ ions;
where the negative electrode comprises aluminum.

In the secondary electrochemical cell of the present invention, each positive electrode comprises:
- a metal mesh that confers stability upon the positive electrode, which is responsible for collecting the electrons originating from the anode during discharge and responsible for directing the electrons towards the anode during charge;
- a gas diffusion layer, pressed into the metal mesh, which is selected from a pyrolytic graphite sheet or a non-woven carbon fabric;
- and a catalytic ink dispersed on the gas diffusion layer.

In a preferred embodiment, the metal mesh that is part of the positive electrode is selected from a nickel mesh and a steel mesh.

The catalytic ink of the positive electrode comprises:
∘ a catalyst that comprises at least one metal oxide selected from ruthenium oxide RuO₂, manganese oxide MnO₂, iridium oxide IrO₂, nickel oxide Ni₂O₃ and lanthanum oxide La₂O₃;
∘ a support for the reduced graphene oxide catalyst;
∘ and an alcoholic solution;

In a preferred embodiment, the catalyst that is part of the catalytic ink of the positive electrode (3) comprises manganese oxide (MnO₂) and at least one metal oxide selected from ruthenium oxide RuO₂, iridium oxide IrO₂, nickel oxide Ni₂O₃ and lanthanum oxide La₂O₃.

In a more preferred embodiment, the catalyst that is part of the catalytic ink of the positive electrode (3) is manganese oxide (MnO₂).

In another preferred embodiment of the present invention, the support for the catalyst that is part of the catalytic ink of the positive electrode (3) is composed of reduced graphene oxide nanoparticles.

The use of reduced graphene oxide nanoparticles in powder form for the support confers better mechanical properties and chemical resistance upon the catalytic ink; it improves the dispersion of the catalyst by increasing the active surface area and the electrical conductivity in the catalytic ink.

The manganese oxide (MnO₂) crystals are reduced on the surface of the graphene nanoparticle powder, to produce structures with a large catalyst surface area, a broad dispersion of the active points and higher electrical conductivity.

In another preferred embodiment of the electrochemical cell, the alcoholic solution that is part of the catalytic ink of the positive electrode (3) is an isopropanol aqueous solution in a 3:1 ratio.

Another preferred embodiment of the electrochemical cell of the invention relates to the fact that the first and the second positive electrodes have the same composition.

In the electrochemical cell of the present invention, a first separation membrane separates the first positive electrode from the negative electrode, and a second separation membrane separates the second positive electrode from the negative electrode. Said separation membranes have a pore size ranging between 60 and 90 pm, in order to allow for passage of the Al⁺³ ions, and are preferably made of polyethylene or polytetrafluoroethylene.

In another preferred embodiment of the electrochemical cell of the invention, the negative electrode that forms the anode is selected from high-purity aluminum (5N) and a high-purity aluminum alloy (5N) that comprises at least one metal selected from Mg, Sn, Zn, In and Ga.

In a more preferred embodiment, it is an aluminum alloy that comprises at least one metal selected from Mg, Sn, Zn, In and Ga, wherein the weight percentage of the metal ranges between 0.1% and 2% with respect to the total weight of the aluminum alloy.

The secondary electrochemical cell of the present invention comprises a non-aqueous electrolyte that covers the first positive electrode, the second positive electrode, the negative electrode, the first separation membrane and the second separation membrane.

In a preferred embodiment of the present invention, the non-aqueous electrolyte comprises:
- an ionic liquid selected from an imidazolium salt, a pyrrolodinium salt, a phosphonium salt or a combination thereof;
- an organic solvent selected from propylene carbonate, dimethyl carbonate, tetrahydrofuran, acetonitrile or a combination thereof;
- and an aluminum salt selected from aluminum hexafluorophosphate, aluminum chloride, aluminum nitrate, aluminum isopropylate or a combination thereof.

In a more preferred embodiment of the present invention, the non-aqueous electrolyte comprises an imidazolium salt as the ionic liquid.

In another, more preferred embodiment, the organic solvent is selected from propylene carbonate, dimethyl carbonate or a combination thereof.

In another preferred embodiment, the weight percentage of the organic solvent in the electrolyte ranges between 0.1% and 8% with respect to the total weight of the electrolyte.

In another preferred embodiment, the aluminum salt is aluminum nitrate.

In another preferred embodiment, the weight percentage of the aluminum salt in the electrolyte ranges between 1% and 5% with respect to the total weight of the electrolyte.

The present invention offers a number of advantages as compared to current storage technologies:
- It uses aluminum as the negative electrode, a metal that is very abundant, widely developed in industry, lightweight and economical.
- Lower weight of the electrochemical cell for the same quantity of accumulated energy.
- Lower volume of the electrochemical cell for the same quantity of accumulated energy.
- The materials used are non-toxic and inert in the event of spillage.
- Absence of the memory effect caused by crystallisation of the components. Unlike Ni-Cd or Ni-MHx batteries, wherein charge of the battery following partial discharge led to secondary crytallisation reactions of the electrolyte salts and the loss of cell capacity, this process does not take place in the present invention.
- Absence of electrolyte stratification, unlike lead-acid batteries, wherein, due to the passage of time without any usage and the effect of gravity, strata with different acid concentrations are created in the electrolyte, leading to malfunction of the electrodes.
- The use of an ionic liquid as the electrolyte prevents the risk of battery ignition, which is a risk reduction factor during exposure to high temperatures.
- Supply of the materials that are part of the electrodes is simple and universal. Materials that are well-known in classic industry and have a stable cost in the market.
- Well-known processes for recycling and/or reusing the components that make up the cell in the case of aluminum, pyrolytic graphite, non-woven carbon fabric and the salts that compose the electrolyte. Once the battery is exhausted, the residual materials thereof may be recycled to a high extent: on the one hand, in the presence of water, aluminum superoxide forms aluminum hydroxide, from which metallic aluminum may be obtained once again through the Hall-Herault industrial reaction. The salts that make up the electrolyte are decomposed to produce new precursor materials, and the carbon undergoes combustion, thereby becoming a heat source.

Throughout the description and the claims, the word "comprises" and variants thereof are not intended to exclude other technical characteristics, additives, components or steps. For persons skilled in the art, other objects, advantages and characteristics of the invention will arise, partly from the description and partly from the implementation of the invention. The following examples and figures are provided for illustrative purposes, and are not intended to limit the scope of the present invention.

### BRIEF DESCRIPTION OF THE FIGURES

**FIG. 1** Diagram of the rechargeable aluminum-air electrochemical cell.
**FIG. 2** Diagram of a positive electrode of the rechargeable aluminum-air cell.
**FIG. 3** Cycling of the rechargeable aluminum-air battery at a symmetrical charge/discharge current of C/100 A.

### EXAMPLES

Below we will illustrate the invention by means of assays performed by the inventors, which demonstrate the effectiveness of the product of the invention.

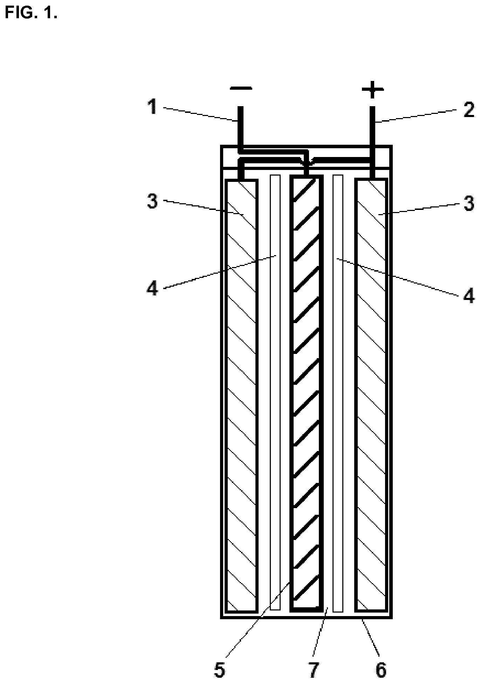

Figure 1 shows a diagram of the composition of the rechargeable Al-air electrochemical cell, which comprises the following elements:
(1) Anode formed by a negative electrode (5)
(2) Cathode formed by two positive electrodes (3)
(3) Positive electrode the composition whereof is described below
(4) Polymer membrane with a pore size ranging between 60-90 pm
(5) Negative electrode formed by a high-purity aluminum sheet (5N)
(6) Micro-perforated housing with a perforation diameter ranging between 1 and 10 µm
(7) Electrolyte composed of an ionic liquid of the imidazolium, dimethyl carbonate and aluminum nitrate families.

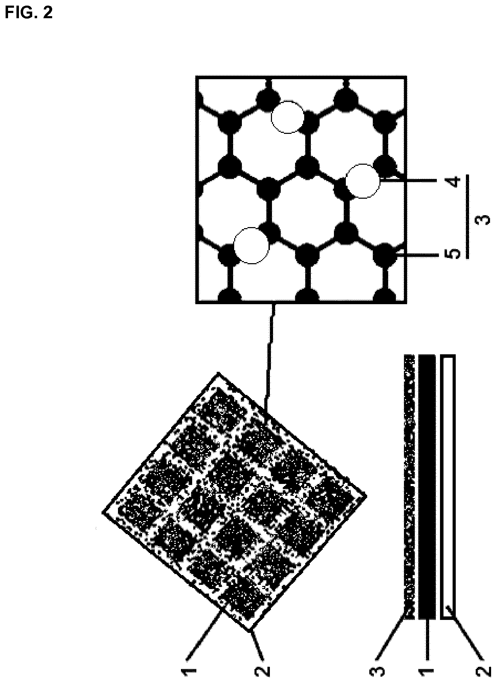

Figure 2 shows a diagram of a positive electrode of the rechargeable Al-air cell. Said positive electrode comprises an electron-collector nickel mesh (2) and a gas diffusion layer (1) made of non-woven carbon fabric pressed into the metal mesh (2). An alcoholic catalytic ink (3) formed by reduced graphene oxide (4) and an MnO₂ catalyst (5) is dispersed on the gas diffusion layer, supported on the reduced graphene oxide (4).

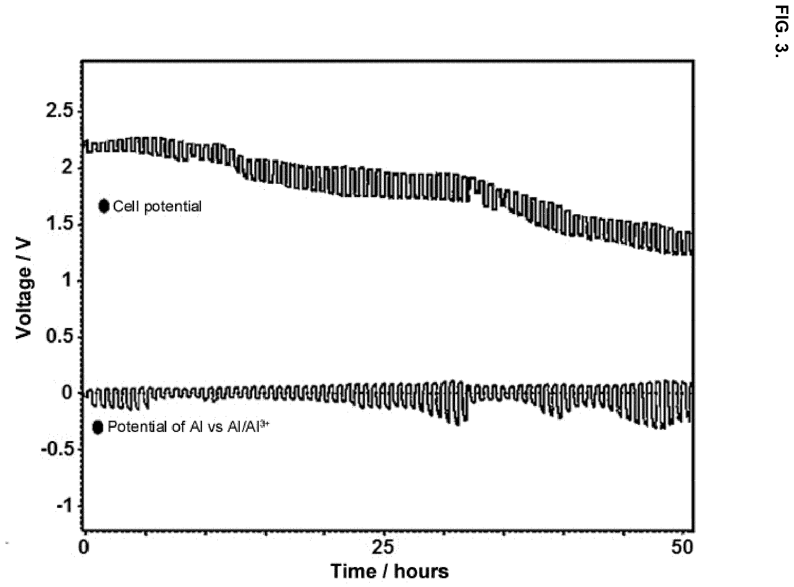

Figure 3 shows the cycling of the rechargeable aluminum-air battery, at a charge and discharge current of C/100 A, i.e. the number of amperes per 100 hours.

The battery potential starts at 2 volts and, during the first cycles, the solid electrode-electrolyte interphase is formed, wherein the electrolyte undergoes a half-reaction with the surface of the carbonaceous electrodes to form the so-called SEI (solid electrolyte interphase). During this process, part of the electrolyte is absorbed by the carbon. From this point onward, the battery potential becomes stabilised at about 1.5 V. The cycling of the cell remains stable for at least 200 cycles, with a coulombic efficiency greater than 75%.

## Claims

1. Secondary aluminum-air electrochemical cell **characterised in that** it comprises:
- a first positive electrode (3) and a second positive electrode (3) electrically connected to one another, to form the cathode (2);
- a negative electrode (5) that forms the anode (1), placed between the first positive electrode (3) and the second positive electrode (3);
- a first separation membrane (4) placed between the first positive electrode (3) and the negative electrode (5);
- a second separation membrane (4) placed between the second positive electrode (3) and the negative electrode (5);
- a non-aqueous electrolyte (7) that covers the first positive electrode (3), the second positive electrode (3), the negative electrode (5), the first separation membrane (4) and the second separation membrane (4);
- a micro-perforated housing (6) that comprises the first positive electrode (3), the second positive electrode (3), the negative electrode (5), the first separation membrane (4), the second separation membrane (4) and the electrolyte (7);
where each positive electrode (3) comprises:
• a metal mesh;
• a gas diffusion layer, pressed into the metal mesh, selected from a pyrolytic graphite sheet or a non-woven carbon fabric;
• and a catalytic ink dispersed on the gas diffusion layer, wherein the catalytic ink comprises:
∘ a catalyst that comprises at least one metal oxide selected from ruthenium oxide RuO₂, manganese oxide MnO₂, iridium oxide IrO₂, nickel oxide Ni₂O₃ and lanthanum oxide La₂O₃;
∘ a support for the catalyst that is part of the catalytic ink of the positive electrode (3), that is composed of reduced graphene oxide nanoparticles;
∘ and an alcoholic solution;
where each separation membrane (4) has a pore size ranging between 60 and 90 pm,
where the negative electrode (5) comprises aluminum.

2. Secondary electrochemical cell according to claim 1, wherein the metal mesh that is part of the positive electrode (3) is selected from a nickel mesh and a steel mesh.

3. Secondary aluminum-air electrochemical cell according to any of claims 1 or 2, wherein the catalyst that is part of the catalytic ink of the positive electrode (3) comprises manganese oxide (MnO₂) and at least one metal oxide selected from ruthenium oxide RuO₂, iridium oxide IrO₂, nickel oxide Ni₂O₃ and lanthanum oxide La₂O₃.

4. Secondary aluminum-air electrochemical cell according to claim 3, wherein the catalyst that is part of the catalytic ink of the positive electrode (3) is manganese oxide (MnO₂).

5. Secondary aluminum-air electrochemical cell according to any of claims 1 to 4, wherein the alcoholic solution that is part of the catalytic ink of the positive electrode (3) is an isopropanol aqueous solution in a 3:1 ratio.

6. Secondary aluminum-air electrochemical cell according to any of claims 1 to 5, wherein the first and the second positive electrodes (3) have the same composition.

7. Secondary aluminum-air electrochemical cell according to any of claims 1 to 6, wherein the separation membrane (4) has a pore size ranging between 60 and 90 pm.

8. Secondary aluminum-air electrochemical cell according to any of claims 1 to 7, wherein the separation membrane (4) is made of polyethylene or polytetrafluoroethylene.

9. Secondary aluminum-air electrochemical cell according to any of claims 1 to 8, wherein the negative electrode (5) is selected from aluminum and an aluminum alloy that comprises at least one metal selected from Mg, Sn, Zn, In and Ga.

10. Secondary aluminum-air electrochemical cell according to claim 9, wherein the negative electrode (5) is an aluminum alloy that comprises at least one metal selected from Mg, Sn, Zn, In and Ga, and the weight percentage of the metal ranges between 0.1% and 2% with respect to the total weight of the aluminum alloy.

11. Secondary aluminum-air electrochemical cell according to any of claims 1 to 10, wherein the non-aqueous electrolyte comprises:
• an ionic liquid selected from an imidazolium salt, a pyrrolodinium salt, a phosphonium salt or a combination thereof;
• an organic solvent selected from propylene carbonate, dimethyl carbonate, tetrahydrofuran, acetonitrile or a combination thereof;
• and an aluminum salt selected from aluminum hexafluorophosphate, aluminum chloride, aluminum nitrate, aluminum isopropylate or a combination thereof.

12. Secondary aluminum-air electrochemical cell according to claim 11, wherein the non-aqueous electrolyte comprises an imidazolium salt as the ionic liquid.

13. Secondary aluminum-air electrochemical cell according to any of claims 11 or 12, wherein the organic solvent is selected from propylene carbonate, dimethyl carbonate or a combination thereof.

14. Secondary aluminum-air electrochemical cell according to any of claims 11 to 13, wherein the weight percentage of the organic solvent in the electrolyte ranges between 0.1% and 8% with respect to the total weight of the electrolyte.

15. Secondary aluminum-air electrochemical cell according to any of claims 11 to 14, wherein the aluminum salt is aluminum nitrate.

16. Secondary aluminum-air electrochemical cell according to any of claims 11 to 15, wherein the weight percentage of the aluminum salt in the electrolyte ranges between 1% and 5% with respect to the total weight of the electrolyte.

## Patentansprüche

1. Elektrochemische Aluminium-Luft-Sekundärzelle, **dadurch gekennzeichnet, dass** sie umfasst:
- eine erste positive Elektrode (3) und eine zweite positive Elektrode (3), die elektrisch miteinander verbunden sind, um die Kathode (2) zu bilden;
- eine negative Elektrode (5), die die Anode (1) bildet und zwischen der ersten positiven Elektrode (3) und der zweiten positiven Elektrode (3) angeordnet ist;
- eine erste Trennmembran (4), die zwischen der ersten positiven Elektrode (3) und der negativen Elektrode (5) angeordnet ist;
- eine zweite Trennmembran (4), die zwischen der zweiten positiven Elektrode (3) und der negativen Elektrode (5) angeordnet ist;
- einen nicht wässrigen Elektrolyten (7), der die erste positive Elektrode (3), die zweite positive Elektrode (3), die negative Elektrode (5), die erste Trennmembran (4) und die zweite Trennmembran (4) bedeckt;
- ein mikroperforiertes Gehäuse (6), das die erste positive Elektrode (3), die zweite positive Elektrode (3), die negative Elektrode (5), die erste Trennmembran (4), die zweite Trennmembran (4) und den Elektrolyten (7) umfasst;
wobei jede positive Elektrode (3) umfasst:
• ein Metallnetz;
• eine in das Metallnetz gepresste Gasdiffusionsschicht, ausgewählt aus einer pyrolytischen Graphitfolie oder einem Kohlenstoffvliesstoff;
• und eine auf der Gasdiffusionsschicht dispergierte katalytische Farbe, wobei die katalytische Farbe umfasst:
∘ einen Katalysator, der mindestens ein Metalloxid umfasst, ausgewählt aus Rutheniumoxid, RuO₂, Manganoxid, MnO₂, Iridiumoxid, IrO₂, Nickeloxid, Ni₂O₃, und Lanthanoxid La₂O₃;
∘ einen Träger für den Katalysator, der Teil der katalytischen Farbe der positiven Elektrode (3) ist und aus Nanopartikeln aus reduziertem Graphenoxid besteht;
∘ und eine alkoholische Lösung;
wobei jede Trennmembran (4) eine Porengröße im Bereich zwischen 60 und 90 pm aufweist,
wobei die negative Elektrode (5) Aluminium umfasst.

2. Elektrochemische Sekundärzelle nach Anspruch 1, wobei das Metallnetz, das Teil der positiven Elektrode (3) ist, aus einem Nickelnetz und einem Stahlnetz ausgewählt ist.

3. Elektrochemische Aluminium-Luft-Sekundärzelle nach einem der Ansprüche 1 oder 2, wobei der Katalysator, der Teil der katalytischen Farbe der positiven Elektrode (3) ist, Manganoxid (MnO₂) und mindestens ein Metalloxid umfasst, ausgewählt aus Rutheniumoxid, RuO₂, Iridiumoxid, IrO₂, Nickeloxid, Ni₂O₃, und Lanthanoxid, La₂O₃.

4. Elektrochemische Aluminium-Luft-Sekundärzelle nach Anspruch 3, wobei der Katalysator, der Teil der katalytischen Farbe der positiven Elektrode (3) ist, Manganoxid (MnO₂) ist.

5. Elektrochemische Aluminium-Luft-Sekundärzelle nach einem der Ansprüche 1 bis 4, wobei die alkoholische Lösung, die Teil der katalytischen Farbe der positiven Elektrode (3) ist, eine wässrige Isopropanollösung in einem Verhältnis von 3:1 ist.

6. Elektrochemische Aluminium-Luft-Sekundärzelle nach einem der Ansprüche 1 bis 5, wobei die erste und die zweite positive Elektrode (3) die gleiche Zusammensetzung aufweisen.

7. Elektrochemische Aluminium-Luft-Sekundärzelle nach einem der Ansprüche 1 bis 6, wobei die Trennmembran (4) eine Porengröße im Bereich zwischen 60 und 90 pm aufweist.

8. Elektrochemische Aluminium-Luft-Sekundärzelle nach einem der Ansprüche 1 bis 7, wobei die Trennmembran (4) aus Polyethylen oder Polytetrafluorethylen hergestellt ist.

9. Elektrochemische Aluminium-Luft-Sekundärzelle nach einem der Ansprüche 1 bis 8, wobei die negative Elektrode (5) ausgewählt ist aus Aluminium und einer Aluminiumlegierung, die mindestens ein Metall umfasst, ausgewählt aus Mg, Sn, Zn, In und Ga.

10. Elektrochemische Aluminium-Luft-Sekundärzelle nach Anspruch 9, wobei die negative Elektrode (5) eine Aluminiumlegierung ist, die mindestens ein Metall umfasst, ausgewählt aus Mg, Sn, Zn, In und Ga, und der prozentuale Gewichtsanteil des Metalls bezogen auf das Gesamtgewicht der Aluminiumlegierung im Bereich zwischen 0,1 % und 2 % liegt.

11. Elektrochemische Aluminium-Luft-Sekundärzelle nach einem der Ansprüche 1 bis 10, wobei der nicht wässrige Elektrolyt umfasst:
• eine ionische Flüssigkeit, ausgewählt aus einem Imidazoliumsalz, einem Pyrrolodiniumsalz, einem Phosphoniumsalz oder einer Kombination davon;
• ein organisches Lösungsmittel, ausgewählt aus Propylencarbonat, Dimethylcarbonat, Tetrahydrofuran, Acetonitril oder einer Kombination davon;
• und ein Aluminiumsalz, ausgewählt aus Aluminiumhexafluorphosphat, Aluminiumchlorid, Aluminiumnitrat, Aluminiumisopropylat oder einer Kombination davon.

12. Elektrochemische Aluminium-Luft-Sekundärzelle nach Anspruch 11, wobei der nicht wässrige Elektrolyt ein Imidazoliumsalz als ionische Flüssigkeit umfasst.

13. Elektrochemische Aluminium-Luft-Sekundärzelle nach einem der Ansprüche 11 oder 12, wobei das organische Lösungsmittel ausgewählt ist aus Propylencarbonat, Dimethylcarbonat oder einer Kombination davon.

14. Elektrochemische Aluminium-Luft-Sekundärzelle nach einem der Ansprüche 11 bis 13, wobei der prozentuale Gewichtsanteil des organischen Lösungsmittels im Elektrolyten bezogen auf das Gesamtgewicht des Elektrolyten im Bereich zwischen 0,1 % und 8 % liegt.

15. Elektrochemische Aluminium-Luft-Sekundärzelle nach einem der Ansprüche 11 bis 14, wobei das Aluminiumsalz Aluminiumnitrat ist.

16. Elektrochemische Aluminium-Luft-Sekundärzelle nach einem der Ansprüche 11 bis 15, wobei der prozentuale Gewichtsanteil des Aluminiumsalzes im Elektrolyten bezogen auf das Gesamtgewicht des Elektrolyten im Bereich zwischen 1 % und 5 % liegt.

## Revendications

1. Cellule électrochimique aluminium-air secondaire **caractérisée en ce qu'**elle comprend :
- une première électrode positive (3) et une deuxième électrode positive (3) connectées électriquement l'une à l'autre, pour former la cathode (2) ;
- une électrode négative (5) formant l'anode (1), placée entre la première électrode positive (3) et la deuxième électrode positive (3) ;
- une première membrane de séparation (4) placée entre la première électrode positive (3) et l'électrode négative (5) ;
- une deuxième membrane de séparation (4) placée entre la deuxième électrode positive (3) et l'électrode négative (5) ;
- un électrolyte non aqueux (7) qui recouvre la première électrode positive (3), la deuxième électrode positive (3), l'électrode négative (5), la première membrane de séparation (4) et la deuxième membrane de séparation (4) ;
- un boîtier micro-perforé (6) comprenant la première électrode positive (3), la deuxième électrode positive (3), l'électrode négative (5), la première membrane de séparation (4), la deuxième membrane de séparation (4) et l'électrolyte (7) ;
chaque électrode positive (3) comprenant :
• un treillis métallique ;
• une couche de diffusion de gaz, comprimée dans le treillis métallique, choisie parmi une feuille de graphite pyrolytique ou un tissu de carbone non tissé ;
• et une encre catalytique dispersée sur la couche de diffusion de gaz, l'encre catalytique comprenant :
∘ un catalyseur comprenant au moins un oxyde métallique choisi parmi l'oxyde de ruthénium RuO₂, l'oxyde de manganèse MnO₂, l'oxyde d'iridium IrO₂, l'oxyde de nickel Ni₂O₃ et l'oxyde de lanthane La₂O₃ ;
∘ un support pour le catalyseur qui fait partie de l'encre catalytique de l'électrode positive (3), qui est composé de nanoparticules d'oxyde de graphène réduit ;
∘ et une solution alcoolique ;
chaque membrane de séparation (4) ayant une taille de pores comprise entre 60 et 90 pm,
l'électrode négative (5) comprenant de l'aluminium.

2. Cellule électrochimique secondaire selon la revendication 1, dans laquelle le treillis métallique faisant partie de l'électrode positive (3) est choisi parmi un treillis en nickel et un treillis en acier.

3. Cellule électrochimique aluminium-air secondaire selon l'une quelconque des revendications 1 ou 2, dans laquelle le catalyseur faisant partie de l'encre catalytique de l'électrode positive (3) comprend de l'oxyde de manganèse (MnO₂) et au moins un oxyde métallique choisi parmi l'oxyde de ruthénium RuO₂, oxyde d'iridium IrO₂, l'oxyde de nickel Ni₂O₃ et l'oxyde de lanthane La₂O₃.

4. Cellule électrochimique aluminium-air secondaire selon la revendication 3, dans laquelle le catalyseur faisant partie de l'encre catalytique de l'électrode positive (3) est l'oxyde de manganèse (MnO₂).

5. Cellule électrochimique aluminium-air secondaire selon l'une quelconque des revendications 1 à 4, dans laquelle la solution alcoolique faisant partie de l'encre catalytique de l'électrode positive (3) est une solution aqueuse d'isopropanol dans un rapport de 3:1.

6. Cellule électrochimique aluminium-air secondaire selon l'une quelconque des revendications 1 à 5, dans laquelle les première et deuxième électrodes positives (3) ont la même composition.

7. Cellule électrochimique aluminium-air secondaire selon l'une quelconque des revendications 1 à 6, dans laquelle la membrane de séparation (4) a une taille de pores comprise entre 60 et 90 pm.

8. Cellule électrochimique aluminium-air secondaire selon l'une quelconque des revendications 1 à 7, dans laquelle la membrane de séparation (4) est en polyéthylène ou en polytétrafluoroéthylène.

9. Cellule électrochimique aluminium-air secondaire selon l'une quelconque des revendications 1 à 8, dans laquelle l'électrode négative (5) est choisie parmi l'aluminium et un alliage d'aluminium qui comprend au moins un métal choisi parmi Mg, Sn, Zn, In et Ga.

10. Cellule électrochimique aluminium-air secondaire selon la revendication 9, dans laquelle l'électrode négative (5) est un alliage d'aluminium qui comprend au moins un métal choisi parmi Mg, Sn, Zn, In et Ga et le pourcentage en poids du métal est compris entre 0,1 % et 2 % par rapport au poids total de l'alliage d'aluminium.

11. Cellule électrochimique aluminium-air secondaire selon l'une quelconque des revendications 1 à 10, dans laquelle l'électrolyte non aqueux comprend :
• un liquide ionique choisi parmi un sel d'imidazolium, un sel de pyrrolodinium, un sel de phosphonium ou une combinaison de ceux-ci ;
• un solvant organique choisi parmi le carbonate de propylène, le carbonate de diméthyle, le tétrahydrofurane, l'acétonitrile ou une combinaison de ceux-ci ;
• et un sel d'aluminium choisi parmi l'hexafluorophosphate d'aluminium, le chlorure d'aluminium, le nitrate d'aluminium, l'isopropylate d'aluminium ou une combinaison de ceux-ci.

12. Cellule électrochimique aluminium-air secondaire selon la revendication 11, dans laquelle l'électrolyte non aqueux comprend un sel d'imidazolium en tant que liquide ionique.

13. Cellule électrochimique aluminium-air secondaire selon l'une quelconque des revendications 11 ou 12, dans laquelle le solvant organique est choisi parmi le carbonate de propylène, le carbonate de diméthyle ou une combinaison de ceux-ci.

14. Cellule électrochimique aluminium-air secondaire selon l'une quelconque des revendications 11 à 13, dans laquelle le pourcentage en poids du solvant organique dans l'électrolyte est compris entre 0,1 % et 8 % par rapport au poids total de l'électrolyte.

15. Cellule électrochimique aluminium-air secondaire selon l'une quelconque des revendications 11 à 14, dans laquelle le sel d'aluminium est du nitrate d'aluminium.

16. Cellule électrochimique aluminium-air secondaire selon l'une quelconque des revendications 11 à 15, dans laquelle le pourcentage en poids du sel d'aluminium dans l'électrolyte est compris entre 1 % et 5 % par rapport au poids total de l'électrolyte.
